# EUROPÄISCHE PATENTSCHRIFT

(11) **EP 1 421 854 B1**
(45) Veröffentlichungstag und Bekanntmachung des Hinweises auf die Patenterteilung: **15.03.2006**
(21) Anmeldenummer: 02026096.4
(22) Anmeldetag: 22.11.2002
(51) Int. Cl.: A22C 11/12

(54) **Vorrichtung mit Vakuumfüller und Clipmodul**
Device with vacuum filler and a clipping machine
Dispositif avec un remplisseur sous vide et un dispositif de serrage par clip

(43) Veröffentlichungstag der Anmeldung: 26.05.2004
(73) Patentinhaber: Albert Handtmann Maschinenfabrik GmbH & Co. KG, 88400 Biberach (DE)
(72) Erfinder: Müller, Gerhard, 88433 Schemmerhofen (DE)
(74) Vertreter: Grünecker, Kinkeldey, Stockmair & Schwanhäusser Anwaltssozietät

(56) Entgegenhaltungen:
- DE-A- 2 730 603
- DE-U- 8 516 678
- US-A- 4 370 779
- US-A- 5 890 955
- US-A1- 2002 083 848
- US-B1- 6 217 436

## Beschreibung

Die Erfindung betrifft eine Vorrichtung, die einen Vakuumfüller und eine Clipeinrichtung umfasst. Der Vakuumfüller dient zum Befüllen eines Darms mit einer pastösen Masse, wie beispielsweise Wurstbrät. An das Befüllen kann sich ein Abdrehen, Abbinden, Einengen oder ähnliches , d.h. ein Abteilen, anschließen, mit dem eine Stelle ausgebildet wird, an der keine oder wenig pastöse Masse in dem Darm vorliegt, so dass anschließend ein Clip an dieser Stelle angebracht werden kann. Derartige Clips bestehen beispielsweise aus Metall oder Kunststoff. Der Clip verschließt hierbei den Darm, so dass die in den Darm gefüllte pastöse Masse nicht austreten kann. Dies geschieht beispielsweise beim Herstellen von Würsten.

Aus der Praxis bekannte Clipmaschinen verfügen über einen eigenen elektrischen oder pneumatischen Antrieb, der unter anderem dazu dient, die mechanischen Komponenten der Clipmaschine zu betätigen. Die Steuerung der Clipmaschine erfolgt beispielsweise durch den Vakuumfüller, der bestimmt, wann ein Clip zu setzen ist (s. DE 27 30 603 A1, US 2002/0083848 A1). Dies geschieht in der Regel nach Bereitstellen einer Portion pastöser Füllmasse in dem Darm.

Derartige automatische Clipmaschinen haben sich als recht kostspielig erwiesen und sind oft in ihrer Leistung (Portionen/Min.) begrenzt.

Aufgabe der vorliegenden Erfindung ist es daher eine Vorrichtung, die einen Vakuumfüller und eine Clipeinrichtung umfasst, sowie ein Verfahren zum Anbringen eines Clips zur Verfügung zu stellen, die/das kostengünstiger ist und das Setzen von mehr Clips pro Zeiteinheit erlaubt.

Die Aufgabe wird gelöst durch eine Vorrichtung nach Anspruch 1, sowie durch ein Verfahren nach Anspruch 12. Bevorzugte Ausführungsformen sind in den jeweiligen Unteransprüchen offenbart.

Bei der Vorrichtung sind der Vakuumfüller und das Clipmodul miteinander gekoppelt, so dass ein Antrieb wie etwa ein Motor, beispielsweise ein Servomotor, in dem Vakuumfüller zum Antrieb des Clipmoduls benutzt werden kann. Dadurch kann möglicherweise auf einen eigenen Antrieb pneumatischer oder elektrischer Art des Clipmoduls verzichtet werden. Ausgeschlossen sind solche zusätzlichen Antriebe jedoch nicht.

Weiterhin erlaubt ein Servomotor eine im Vergleich zu sonstigen pneumatischen und elektrischen Antrieben höhere Geschwindigkeiten und eine höhere Präzision im Bewegungsablauf beim Setzen des Clips, so dass eine höhere Verarbeitungsgeschwindigkeit erreicht wird.

Der Motor des Vakuumfüllers weist eine rotierbare Achse auf oder ist mit einem rotierbaren Teil gekoppelt, mit dem das Clipmodul angetrieben werden kann. Der Antrieb kann beispielsweise über eine Welle erfolgen, die zwischen dem Vakuumfüller und dem Clipmodul vorgesehen ist.

Vorzugsweise umfasst das Clipmodul eine Verdrängereinrichtung, mit der die Stellen ausgebildet werden können, in denen keine oder wenig pastöse Masse in dem Darm vorliegt, so dass dort die Clips angebracht werden können. Diese Verdrängereinrichtung teilt dadurch die verschiedenen Portionen von pastöser Masse in dem Darm gegeneinander ab. Das Abteilen der Portionen kann durch Einengen des Darms mit Ringen, U- oder V-förmigen Backen, Klammem, oder Bügeln, Rollen, Walzen etc. erfolgen.

Das Clipmodul verfügt optional über eine zusätzliche Trenneinrichtung 16. Damit können die Wurststränge in einzelne Portionen oder in Portionsketten mit beliebiger Anzahl von Portionen getrennt werden.

Vorzugsweise kann der Antrieb des Clipmoduls durch einen am Vakuumfüller vorgesehenen Anschluss für eine Abdreheinheit vorgesehen sein.

Vorzugsweise weist der Vakuumfüller eine Steuereinheit auf, mit der das Füllen, das Portionieren und das Clippen gesteuert werden können. Die Steuereinheit steuert hierzu unter anderem die Motoren, beispielsweise eines Flügelzellenförderwerks, mit dem die pastöse Masse zu einem Füllrohr hin gefördert wird, sowie beispielsweise einen Servomotor zum Antrieb des Clipmoduls. Durch den Servoantrieb des Clipmoduls ist eine Überlagerung des Füllens, des Portionierens und des Clippens möglich, so dass insgesamt eine höhere Produktionsgeschwindigkeit erreicht wird.

Die Vorrichtung kann auch noch eine vorteilhafterweise automatische Aufhängeeinheit umfassen.

Vorteilhafte Ausgestaltungen des Clipmoduls und des Vakuumfüllers, sowie des Verfahrens zum Anbringen eines Clips werden anhand der beiliegenden Figuren beschrieben. Dabei zeigt:
- Fig. 1: eine schematische Darstellung einer ersten Ausführungsform der Erfindung und
- Fig. 2: eine schematische Darstellung einer zweiten Ausführungsform der Erfindung.

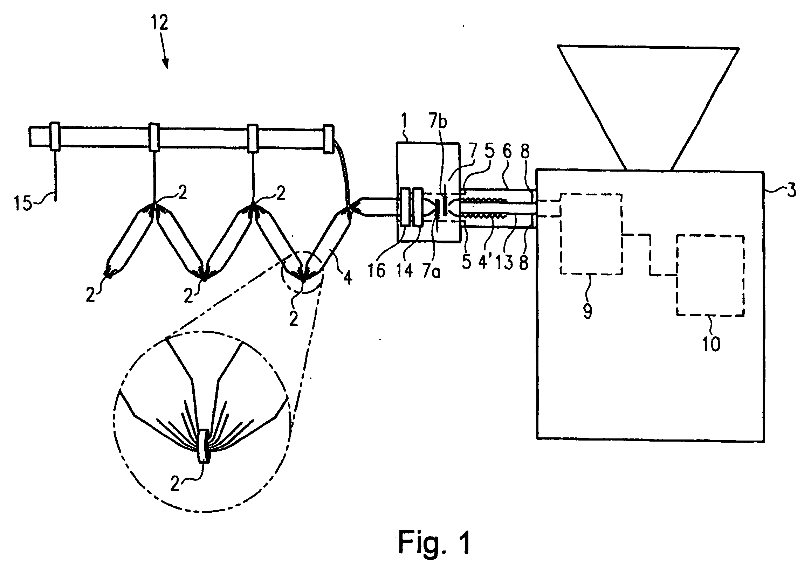

In Fig. 1 ist eine Vorrichtung mit einem Vakuumfüller 3 und einem Clipmodul 1 dargestellt, wobei in den Vakuumfüller von oben durch den Trichter pastöse Masse eingefüllt werden kann. Der Vakuumfüller 3 umfasst ein Füllrohr 13, das zum Füllen eines Darms vorgesehen ist. Neben dem Füllrohr ist ein Clipmodul angeordnet, das eine Verdrängereinrichtung 7 und eine Clipsetzeinrichtung 14 umfasst Die Verdrängereinrichtung 7 umfasst zwei Elemente 7a und 7b, die gegeneinander beweglich sind und einen Darm zwischen sich einengen können. Die Clipsetzeinrichtung 14 kann die Clips 2 setzen. Die Clipsetzeinrichtung 14 kann neben der Verdrängereinrichtung 7 angeordnet sein oder direkt bei oder auch zwischen der Verdrängereinrichtung 7, so dass die Clips 2 im Bereich der Verdrängereinrichtung 7 gesetzt werden können. Die Clipsetzeinrichtung 14 kann zum gleichzeitigen Setzen von zwei benachbarten Clips 2 ausgebildet sein.

Eine Trenneinrichtung 16 ist bei, oder zwischen, oder stromab der Clipsetzeinrichtung 14 vorgesehen. Sie dient dazu einzelne oder mehrere Portionen jeweils voneinander zu trennen. Falls zwei Satz von beispielsweise Verdrängerbacken als Verdrängereinrichtung 7 vorgesehen sind, die die Ausbildung einer breiten eingeschnürten Stelle des Darms 4 erlauben, und die Clipsetzeinrichtung 14 zwischen der Verdrängereinrichtung 7, d. h. zwischen den beispielsweise zwei Sätzen von Verdrängerbacken, angeordnet ist, kann die Clipsetzeinrichtung 14 zwei benachbarte Clips 2 setzen und eine dazwischen wirkende Trenneinrichtung 16 kann den Darm 4 zwischen den zwei Clips 2 trennen.

An dem Vakuumfüller 3 ist ein rotierbares Teil 8 vorgesehen, das von einem Servomotor 9 angetrieben werden kann. An dem rotierbaren Teil 8 ist eine Welle 6 angeordnet, die ihrerseits mit einem rotierbaren Teil 5 des Clipmoduls 1 verbunden ist. Mit dem rotierbaren Teil 5 des Clipmoduls 1 sind zumindest einige der verschiedenen Komponenten des Clipmoduls 1 mechanisch antreibbar. Die Welle 6 kann von dem Clipmodul 1 umfasst oder auch nur an das Clipmodul 1 anschließbar sein. Eine horizontal liegende Welle 6 erlaubt eine einfache Konstruktion, insbesondere falls die Welle 6 an den Servomotor 9 angeschlossen werden soll, der auch zum Antrieb einer Abdreheinrichtung vorgesehen ist, da diese oft seitlich neben dem Vakuumfüller 3 angeordnet ist.

Der Vakuumfüller 3 umfasst also eine Aufsetzeinrichtung für das Clipmodul 1, dass sowohl die mechanischen als auch die steuerungstechnischen Komponenten umfasst. Die mechanischen Komponenten bei dem Vakuumfüller 3 sind bei der Ausführungsform beispielsweise das rotierbare Teil 8 und die steuerungstechnischen sind die zur Steuerung eines Clipmoduls 1 ausgebildete Steuereinheit 10.

Stromab des Clipmoduls 1 ist eine Aufhängeeinheit 12 dargestellt, die eine Schiene umfasst, auf der Haken 15 angeordnet sind. Die Aufhängeeinheit 12 ist über eine nicht dargestellte Signalleitung von dem Vakuumfüller 3 oder dem Clipmodul 1 aus steuerbar. Auch die Aufhängeeinheit 12 kann mit dem Vakuumfüller 3 angetrieben werden, falls ein entsprechender Antrieb bei dem Vakuumfüller 3 zur Verfügung steht. Die Haken 15 können in die Bahn des aus dem Clipmodul 1 austretenden Darms geschwenkt werden, so dass der Darm 4 von den Haken 15 erfasst und aufgehängt wird. Hierbei kann die Aufhängung wahlweise, z.B. wie in Fig. 1 gezeigt, nach jeder zweiten Portion erfolgen oder aber auch nach jeder anderen Zahl von Portionen wie beispielsweise 5 oder 10.

Das Clipmodul 1 verfügt bei der hier dargestellten Ausführungsform über keinen eigenen elektrischen oder pneumatischen Antrieb. In anderen Ausführungsformen können jedoch insbesondere für Hilfsfunktionen ein oder mehrere zusätzliche Antriebe vorgesehen sein.

Die Welle 6 zwischen dem rotierbaren Teil 8 des Vakuumfüllers und dem rotierbaren Teil 5 des Clipmoduls 1 kann um das Füllrohr 13 herum angeordnet sein oder auch neben oder unterhalb von dem Füllrohr 13.

Die Welle 6 ist mit entsprechenden Kupplungen, wie etwa Stimzahn-Kupplungen, an den Teil 8 oder 5 form- oder kraftschlüssig anschließbar. Auch können die Teile 5 oder 8 jeweils über Zahnräder, Getriebe, Riemen, Zahnriemen etc. mit der Welle 6 gekoppelt sein. Zwischen dem Servomotor 9 und dem Clipmodul 1 kann hierbei an jeder beliebigen geeigneten Stelle ein Getriebe vorgesehen sein. Vorzugsweise ist ein Getriebe auf der Seite des Clipmoduls 1 angeordnet, so dass eine von dem Vakuumfüller 3 vorgegebene Antriebsgeschwindigkeit für die Anforderungen des Clipmoduls 1 angepasst werden kann.

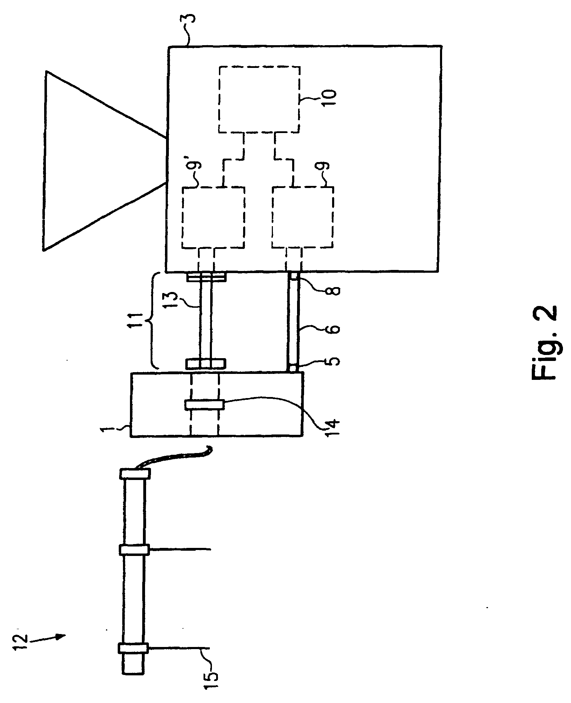

In Fig. 2 ist eine zweite Ausführungsform dargestellt. Ein Vakuumfüller 3 umfasst hierbei zwei Servomotoren 9 und 9'. Der Servomotor 9 ist mit dem rotierbaren Teil 8 gekoppelt, das mit der Welle 6 und dem rotierbaren Teil 5 des Clipmoduls 1 gekoppelt ist.

Weiterhin ist eine Abdreheinheit 11 vorgesehen, die mit einem Servomotor 9' angetrieben werden kann.

Ein Clipmodul 1 mit einer Clipsetzeinrichtung 14 ist stromab der Abdreheinheit 11 angeordnet und dient dazu, Clips 2 an den Stellen des Darms 4 zu setzen, an denen das Abdrehen stattgefunden hat. Das Clipmodul 1 kann die Clips 2 auch direkt bei der Abdreheinheit 11 setzen.

Stromab des Clipmoduls 1 ist auch hier, wie in Fig. 1, eine Aufhängeeinheit 12 angeordnet. Die Aufhängeeinheit 12 kann von dem Clipmodul 1 oder dem Vakuumfüller 3 gesteuert oder angetrieben werden.

Die Servomotoren 9 und 9' sind über entsprechende Leitungen mit einer Steuereinheit 10 verbunden. Die Steuereinheit 10 kann auch zum Steuem des Clipmoduls 1 und/oder der Aufhängeeinheit 12 vorgesehen sein.

Das Clipmodul 1 verfügt weiterhin nicht über einen eigenen elektrischen oder pneumatischen Antrieb. Das Clipmodul 1 ist mechanisch über die Welle 6 mit dem Vakuumfüller 3 gekoppelt.

Sowohl bei dem Clipmodul 1 aus Fig. 1 und Fig. 2 können Mittel zum Einlegen eines Fadens oder einer Schlaufe beim Clippen vorgesehen sein.

Das Verfahren zum Anbringen eines Clips 2 wird im Folgenden mit Bezug auf Fig. 1 erläutert.

In den oben am Vakuumfüller 3 angeordneten Trichter wird pastöse Masse eingefüllt, die mit einem Förderwerk in dem Vakuumfüller 3 zu dem Füllrohr 13 gefördert wird. Am Ende des Füllrohrs 13 tritt die pastöse Masse in den auf dem Füllrohr 13 aufgezogenen Darm 4' aus, so dass ein mit pastöser Masse gefüllter Darm 4 erzeugt wird. Der Darm 4 tritt in das Clipmodul 1 ein, in dem eine Verdrängereinrichtung 7 angeordnet ist, mit der eine Einengung des Darms erzeugt wird. An der eingeengten Stelle kann mit einer Clipseizeinrichtung 14 ein Clip 2 gesetzt werden. Es können hierbei auch zwei Clips 2 nebeneinander gesetzt werden, so dass später einmal die erzeugten Würste zwischen zwei benachbarten Clips 2 voneinander getrennt werden können. Die aus dem Clipmodul 1 austretenden Würste werden von den Haken 15 der Aufhängeeinrichtung 12 erfasst, so dass sie von den Haken 15 herabhängen können. Die Trenneinrichtung 16 kann auch nach einer bestimmten Anzahl von Portionen eine Trennung durchführen, um so einen vereinzelten Strang mit der bestimmten Portionenanzahl herzustellen.

Die Verdrängereinrichtung 7 und die Clipsetzeinrichtung 14 sowie die optionale Trenneinrichtung 16 des Clipmoduls 1 werden hierbei mechanisch von dem rotierenden Teil 5 des Clipmoduls 1 angetrieben, das seinerseits über die Welle 6 und das rotierbar bewegliche Teil 8 durch den Servomotor 9 des Vakuumfüllers 3 angetrieben wird.

## Patentansprüche

1. Vorrichtung mit:
einem Vakuumfüller (3) zum Befüllen eines Darms (4) jeglicher Art mit pastöser Masse und
mit einem Clipmodul (1) zum Anbringen eines Clips (2) an einen gefüllten Darm (4),
**dadurch gekennzeichnet, dass**
der Antrieb des Clipmoduls (1) durch den Vakuumfüller (3) vorgesehen ist.

2. Vorrichtung nach Anspruch 1, **dadurch gekennzeichnet, dass**
das Clipmodul (1) einen rotierbar von dem Vakuumfüller (3) antreibbaren Teil (5) aufweist.

3. Vorrichtung nach einem der Ansprüche 1 oder 2, **dadurch gekennzeichnet, dass** der Vakuumfüller einen rotierbar antreibbaren Teil (8) aufweist, mit dem das Clipmodul (1) antreibbar ist.

4. Vorrichtung nach einem der Ansprüche 1 bis 3, **dadurch gekennzeichnet, dass** zwischen dem Clipmodul (1) und dem Vakuumfüller (3) eine Welle (6) angeordnet ist, die an den Vakuumfüller (3) zum Antrieb des Clipmoduls (1) angeschlossen ist, wobei die Welle (6) vorzugsweise horizontal liegt.

5. Vorrichtung nach einem der Ansprüche 1 bis 4, **dadurch gekennzeichnet, dass** das Clipmodul (1) eine Verdrängereinrichtung (7) umfasst.

6. Vorrichtung nach einem der Ansprüche 1 bis 5, **dadurch gekennzeichnet, dass** Mittel zum Einlegen eines Fadens oder einer Schlaufe beim Clippen vorgesehen sind.

7. Vorrichtung nach einem der Ansprüche 1 bis 6, **dadurch gekennzeichnet, dass** eine Trenneinrichtung (16) zum Trennen von Portionen vorgesehen ist

8. Vorrichtung nach einem der Ansprüche 1 bis 7 **dadurch gekennzeichnet, dass** ein Servomotor (9) des Vakuumfüllers (3) für den Antrieb des Clipmoduls (1) einsetzbar ist, wobei der Servomotor (9) vorzugsweise auch zum Antrieb von anderen Funktionen wie etwa des Abdrehens, einsetzbar ist.

9. Vorrichtung nach einem der Ansprüche 1 bis 8, **dadurch gekennzeichnet, dass** eine Steuereinheit (10) zum Steuern des Füllens, des Portionierens und des Clippens und vorzugsweise auch des Trennens bzw. Aufhängens vorgesehen ist

10. Vorrichtung nach einem der Ansprüche 1 bis 9, **dadurch gekennzeichnet, dass** eine Abdreheinheit (11) bei einer Fülleinrichtung des Vakuumfüllers (3) angeordnet ist.

11. Vorrichtung nach einem der Ansprüche 1 bis 10, **dadurch gekennzeichnet, dass** eine vorzugsweise automatische Aufhängeeinheit (12) zum wahlweisen Aufhängen des Darms (4), die vorzugsweise durch den Vakuumfüller (3) und/oder das Clipmodul (1) gesteuert und/oder angetrieben wird, vorgesehen ist.

12. Verfahren zum Anbringen eines Clips (2) mit einem Clipmodul (1) an einen Darm (4) jeglicher Art mit den Schritten:
- Füllen des Darms (4) mit einer pastösen Masse durch einen Vakuumfüller (3),
- Abteilen der Portionen,
- Anbringen eines Clips (2) mit einem Clipmodul (1),
**dadurch gekennzeichnet, dass**
das Clipmodul (1) von dem Vakuumfüller (3) angetrieben wird.

13. Verfahren nach Anspruch 12, **dadurch gekennzeichnet, dass** Portionen voneinander getrennt werden.

14. Verfahren nach Anspruch 12 oder 13, **dadurch gekennzeichnet, dass** das Abteilen und das Clippen zumindest teilweise gleichzeitig stattfindet.

15. Verfahren nach einem der Ansprüche 12 bis 14, **dadurch gekennzeichnet, dass** nach dem Clippen der Darm (4) automatisch aufgehängt wird.

16. Verfahren nach einem der Ansprüche 12 bis 15, **dadurch gekennzeichnet, dass** ein Faden oder eine Schlaufe bevorzugterweise beim Setzen des Clips (2) angebracht wird.

## Claims

1. An apparatus comprising:
a vacuum filler (3) for stuffing a casing (4) of any kind with a pasty substance and
a clip module (1) for applying a clip (2) to a stuffed casing (4),
**characterized in that**
the clip module (1) is adapted to be driven by the vacuum filler (3).

2. The apparatus according to claim 1, **characterized in that**
the clip module (1) comprises a part (5) which is adapted to be rotatably driven by the vacuum filler (3).

3. The apparatus according to one of the claims 1 or 2, **characterized in that** the vacuum filler comprises a part (8) which is adapted to be rotatably driven and by means of which the clip module (1) can be driven.

4. The apparatus according to one of the claims 1 to 3, **characterized in that** the clip module (1) and the vacuum filler (3) have arranged between them a shaft (6), which is connected to the vacuum filler (3) for driving the clip module (1), said shaft (6) being preferably a horizontally extending shaft.

5. The apparatus according to one of the claims 1 to 4, **characterized in that** the clip module (1) comprise a displacer (7).

6. The apparatus according to one of the claims 1 to 5, **characterized in that** means are provided for inserting a thread or a loop when the clips are being set.

7. The apparatus according to one of the claims 1 to 6, **characterized in that** a separator (16) is provided for separating respective portions.

8. The apparatus according to one of the claims 1 to 7, **characterized in that** a servomotor (9) of the vacuum filler (3) can be used for driving the clip module (1), said servomotor (9) being preferably adapted to be used for driving also other functions, such as the twisting off.

9. The apparatus according to one of the claims 1 to 8, **characterized in that** a control unit (10) is provided for controlling the stuffing, the portioning and the clipping and, preferably, also the separating and the suspending.

10. The apparatus according to one of the claims 1 to 9, **characterized in that** a twist-off unit (11) is provided adjacent to a stuffing means of the vacuum filler (3).

11. The apparatus according to one of the claims 1 to 10, **characterized in that** a preferably automatic suspension unit (12) for selectively suspending the casing (4) is provided, said suspension unit (12) being controlled and/or driven preferably by the vacuum filler (3) and/or the clip module (1).

12. A method of applying to a casing (4) of any kind a clip (2) by means of a clip module (1), said method comprising the steps of:
- stuffing the casing (4) with a pasty substance by means of a vacuum filler (3),
- separating the portions,
- applying a clip (2) by means of a clip module (1),
**characterized in that**
the clip module (1) is driven by the vacuum filler (3).

13. The method according to claim 12, **characterized in that** the portions are separated from one another.

14. The method according to claim 12 or 13, **characterized in that** the separation and the setting of clips take place, at least partly, at the same time.

15. The method according to one of the claims 12 to 14, **characterized in that** the casing (4) is suspended automatically when the clips have been set.

16. The method according to one of the claims 12 to 15, **characterized in that** a thread or a loop is attached, preferably when the clip (2) is being set.

## Revendications

1. Dispositif comprenant :
un remplisseur sous vide (3) pour remplir un boyau (4) de type quelconque de masse pâteuse et
comprenant un module à pince (1) pour monter une pince (2) sur un boyau rempli (4),
**caractérisé en ce que**
l'entraînement du module à pince (1) est prévu par le remplisseur sous vide (3).

2. Dispositif selon la revendication 1, **caractérisé en ce que** le module à pince (1) présente une partie rotative (5) pouvant être entraînée par le remplisseur sous vide (3).

3. Dispositif selon l'une des revendications 1 ou 2, **caractérisé en ce que** le remplisseur sous vide présente une partie rotative (8) pouvant être entraînée, par laquelle le module à pince (1) peut être entraîné.

4. Dispositif selon l'une des revendications 1 à 3, **caractérisé en ce qu'**entre le module à pince (1) et le remplisseur sous vide (3) est disposé un arbre (6) qui est raccordé au remplisseur sous vide (3) pour entraîner le module à pince (1), l'arbre (6) étant de préférence horizontal.

5. Dispositif selon l'une des revendications 1 à 4, **caractérisé en ce que** le module à pince (1) comprend un dispositif de déplacement (7).

6. Dispositif selon l'une des revendications 1 à 5, **caractérisé en ce que** des moyens sont prévus pour insérer un fil ou une boucle lors du pincement.

7. Dispositif selon l'une des revendications 1 à 6, **caractérisé en ce qu'**un dispositif de séparation (16) est prévu pour séparer des portions.

8. Dispositif selon l'une des revendications 1 à 7 **caractérisé en ce qu'**un servomoteur (9) du remplisseur sous vide (3) peut être employé pour entraîner le module à pince (1), le servomoteur (9) pouvant de préférence être employé également pour entraîner d'autres fonctions comme par exemple la torsion.

9. Dispositif selon l'une des revendications 1 à 8, **caractérisé en ce qu'**une unité de commande (10) est prévue pour commander le remplissage, la séparation en portions et le pincement et de préférence également la séparation et/ou l'accrochage.

10. Dispositif selon l'une des revendications 1 à 9, **caractérisé en ce qu'**une unité de torsion (11) est disposée près d'un dispositif de remplissage du remplisseur sous vide (3).

11. Dispositif selon l'une des revendications 1 à 10, **caractérisé en ce que** pour accrocher de manière sélective le boyau (4) est prévue une unité d'accrochage (12) de préférence automatique, qui est de préférence commandée et/ou entraînée par le remplisseur sous vide (3) et/ou le module à pince (1).

12. Procédé pour monter une pince (2) avec un module à pince (1) sur un boyau (4) de type quelconque comportant les étapes de :
- remplissage du boyau (4) avec une masse pâteuse par un remplisseur sous vide (3),
- division des portions,
- montage d'une pince (2) avec un module à pince (1),
**caractérisé en ce que**
- le module à pince (1) est entraîné par le remplisseur sous vide (3).

13. Procédé selon la revendication 12, **caractérisé en ce que** des portions sont séparées les unes des autres.

14. Procédé selon la revendication 12 ou 13, **caractérisé en ce que** la division et le pincement s'effectuent au moins en partie simultanément.

15. Procédé selon l'une des revendications 12 à 14, **caractérisé en ce qu'**après le pincement le boyau (4) est accroché automatiquement.

16. Procédé selon l'une des revendications 12 à 15, **caractérisé en ce qu'**un fil ou une boucle est posé de préférence lors de la mise en place de la pince (2).
